# EUROPEAN PATENT APPLICATION

(11) **EP 2 568 422 A1**
(43) Date of publication of application: **13.03.2013**
(21) Application number: 11382289.4
(22) Date of filing: 08.09.2011
(51) Int. Cl.: G06Q 10/02

(54) **Electronic ticket validation method**

(71) Applicant: Airticket S.L., 28049 Madrid (ES)
(72) Inventor: Shaikh Urbina, David, E-28049 Madrid (ES); Larrea, José María, E-28049 E-28049 (ES)
(74) Representative: ABG Patentes, S.L.

(57) **Abstract**

The present invention refers to an electronic ticket validation method that facilitates the purchase of electronic tickets and the subsequent access to events avoiding fraud, amongst others, through geographic location at the moment of validation and the remote availability of the ticket.

## Description

### FIELD OF THE INVENTION

The present invention refers to an electronic ticket validation method that facilitates the purchase of electronic tickets and the subsequent access to events avoiding fraud, amongst others, through geographic location at the moment of validation and the remote availability of the ticket.

### BACKGROUND OF THE INVENTION

The technical problems this invention faces are the existing problems of electronic ticket purchase and the subsequent use of the fraud purchase and the enjoyment of these tickets.

Currently there are different systems to acquire electronic tickets, for example the purchase of plane tickets via Internet that requires the ticket to be printed on paper and to be validated when arriving in the airport. This system has the following disadvantages: the user has to have a printer, if the user folds, breaks the paper the airline usually charges an additional fee for reprinting the flight ticket, as well as the easiness of forging an image with many image processing software.

As for ticket acquisition to collect the ticket the user is required to show the credit card used to purchase the tickets so a third party buyer is not able to purchase the ticket.

Other managing system access to events consist of the purchase from your mobile phone and the antifraud system determines that the following validation can only be done with the same phone, which means the ticket can only be validated from that same mobile device with the inconvenience that you can't buy the ticket from a home computer or a different mobile phone that will be taken to the event neither purchase a ticket for a third party.

The purchase and access to an event from a mobile phone avoids having to queue up. As you do not have to collect the ticket from a cash point there is no need to print it as it is received in your mobile phone. This current invention solves all these problems as well as provides a validation method against counterfeited tickets.

### DESCRIPTION OF THE INVENTION

This current invention describes a *method for validating electronic tickets throughout a system comprising:*
*a. a server connected to a communications network, preferably Internet,*
*b. a database managed by the server for the maintenance and storage for at least the following tables:*
   ● *a users table,*
   ● *an event's table this table should contain at least information about the location of the event,*
   ● *a table of electronic tickets purchased,*
      *wherein the database contains at least the relationship that links each electronic ticket purchased with a user and an event,*
   In the mentioned server all the data related to purchases is stored, so the databases with the three tables that are related are stored and available. The user's table where the users ID can be logged in with an unlimited list of options like: name, username, password, pseudonym and mobile device (MSISDN).
   The events table has the information about available events where some examples are: shows with schedules, places and sessions of a certain film or concert or flights with departure, arrivals and timetables. Each one of these events will have special information on the geolocation of the event (in latitude-longitude coordinates format or physical address, street number, or threshold distance from a particular numbered location, for instance if each film or theater or airport has a numbered Wi-Fi or Bluetooth, the minimum power reception required for that connection).
   There is also another table with the acquired tickets, bought from a home computer, a mobile phone or even an electronic screen located in the event's location to buy instantly (as an alternative to conventional ticket box purchase). In the database the three tables are related to each one of the purchased tickets, and each ticket is associated with a user and event.
*c. an application adapted to run on a mobile device connected to said communications network, capable of access to that server, and the mobile device comprises at least one location system, preferably GPS, for the validation of electronic tickets available by accessing the server,*
   In this document, mobile phone refers to any adapted device that enables wireless communication and that is capable of running applications or computer programs. Some examples are: mobile phones with Internet access, a PDA, a PC tablet or a netbook. In one of the examples of the embodiment of the invention it is mentioned a mobile phone, but the invention is not limited to telephones. An application is available in Internet and it can be downloaded to a mobile phone from which the validation can be done or an application that can be preloaded in any phone at the moment of purchase. This application is executed in the phone that is connected to the communication network so it can access the mentioned server. The device will have a location system preferably GPS, but it is not limited to this system, and it can also be located by cell, CellID (according to the average power received by the different mobile phone antennas that are providing coverage to a device) also by the location with Wi-Fi access or Bluetooth in the event's location (the position is determined by the connections possibilities and the amount of signal received in the mobile phone) or any other geolocation system. Through access to the server from the telephone application you can access the electronic ticket to validate them.
*wherein if a user attempts to access an event, validation occurs if:*
● *it is verified that the access attempt is made by a user running the application such as c) which shows that the user is in possession of a valid electronic ticket,*
   When a user logs into the application that is executed in the mobile phone, this is connected through the communication network to the server. The server shows the electronic tickets that have been validated by the user as they have been linked to the user with the event's tables and the purchased tickets in the server's database. The application can show either all the valid electronic tickets or only those electronic tickets that comply with the validation conditions expressed in the following condition. That is, the validation of the purchased electronic ticket only occurs if the user has an electronic ticket to access a specific event and, at the same time:
● *it is verified that the distance between the geolocation of the mobile device and the event location for the electronic ticket is less than a preset value (dₜᵣ).*
   This condition implies that when the electronic ticket is validated the mobile phone is within a radius of location of the event. Thus, the position registered in the mobile device in the location system, preferably GPS, determines the distance between the mobile phone and the event associated to an electronic ticket that has to be lower than an established value, so the validation or even the sample of the electronic ticket from the application can be validated.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawing.

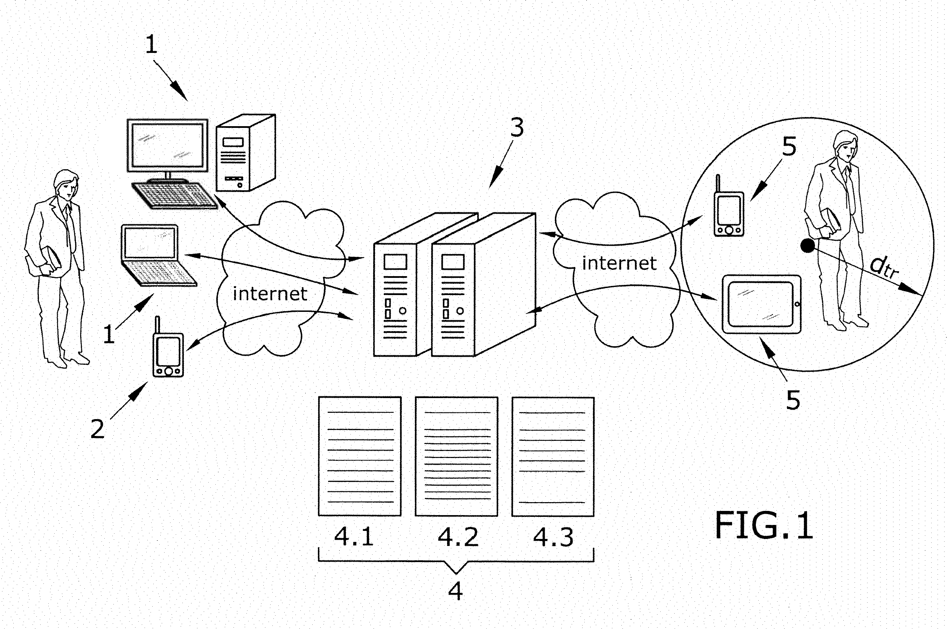

- Figure 1: In this figure, it is shown the validation system according to the preferred embodiment example, from where the purchase and subsequent validation is done.

### DETAILED DESCRIPTION OF THE INVENTION

In the embodiment's example briefly represented in picture 1, the user buys an electronic ticket to an event that takes place at a certain time and in a certain location, which is registered in the server (3). Afterwards, the user goes to the event, the user runs the application in his mobile device (5) and chooses from the application the e-ticket to be validated. Then, it is verified that the mobile device (5) is within a radius from the event associated with the ticket and the validation method takes place. The possibilities of the different steps are described as follows.

In picture 1 the user's purchase action is taken place from a laptop or a desktop computer (1) or from a mobile device (2). This mobile device (2) does not have to be the same one from which the ticket will be validated but it can be too. As we have described before, during the description it will be understood how a mobile device (2,5) as a mobile phone, a tab, a PC tab a PDA or a netbook that has access to communication network such as the Internet and that has the capacity to execute an application or computer software. This electronic ticket can be used for different events for example: a ticket to a show, for example to the cinema, for a concert, for a play, for the museum, or even a plane ticket. The protection scope is not restricted to the type of event and can be valid for any event, which's access is managed currently or in the future by the sales of on-line tickets. In particular, the ticket can be a discount coupon and the event would be the applying of the discount while products are being purchase at a shop in a particular place. In this case, the discount coupon is acquired through the server.

It is very relevant that the user does not have a ticket downloaded neither in his mobile device (2, 5) neither in the application, nor in the computer (1) from which he has purchased the ticket; the electronic ticket is in the server (3) and the application will show it only when he connects to it, that is, the application only shows the information existing in the server's (3) database (4).

In the preferred embodiment, at the moment of purchasing the electronic tickets, the server (3) creates in the database (4) in the table of electronic tickets purchased (4.3) a new entry that has a new record and that is linked to a user in the users' table (4.1) as well as an event in the event's table (4.2). In an example of the embodiment, the server sends the user an e-mail with the purchase information or provides a user name and a password to enter the application. In another example of an embodiment of the invention the users ID is done through the mobile device (5) through MSISDN (phone number), which enables the purchase from a mobile phone (2) and to validate it from another mobile device (5). If the application is not preloaded on the mobile device (5), the user must download it from the ticket sales company or from an independent website and afterwards install it in his mobile device (5).

When the time comes to enjoy the event, the user goes where it takes place. Afterwards, the user logs in the application with the identification system that has been determined: some of these examples are to introduce the user name and password given to access the application or chosen in the purchase; or a given telephone number that can be introduced manually; or check the telephone number automatically. There are different possibilities of embodiment; in the first one, the application connects to the server (3) and shows the electronic tickets that the user has and:
- either the user selects the ticket or tickets, if there are more than one, to be validated amongst all the available tickets,
- or the location system determines that the user is in a particular position for which only certain tickets are valid (distance from the mobile device(5) to the place for that event is less than a certain value dₜᵣ).

Thus, in the first way of the invention according to these possibilities, the application is connected to the server and shows all the possible events, and inside each event, the application shows the electronic tickets that the user has purchased. The application will only allow the validation of tickets that correspond to the correct location of the user at that moment.

Once an electronic ticket has been selected to be validated, in the case that the user has selected it and yet the location system did not intervened, the mobile device (5) through its location system, determines where the mobile device is (5) and makes sure that it is within the radius in respect of the location of the event (location distance lower than the predetermined value dₜᵣ). So, the position recorded in the mobile device (5) in the location system, preferably GPS, determines the distance between the mobile device and the event that corresponds with the electronic ticket to be validated which has to be lower than the predetermined value so validation takes place.

In the second Embodiment according to these possibilities, if the user has bought many cinema tickets and only some of them correspond with the tickets where he is located at that moment, the application will only show those two tickets and the user has to select the tickets he wants to validate. If there is only one ticket that corresponds to the location at that moment, only that electronic ticket will be shown.

As well as mentioned before, there can be another location which is not GPS, as GPS systems are sometimes not very effective indoors and if the user is not in a cinema or a shopping Centre, the location system can have connectivity problems. In this case, other location systems can be established, for example through CellID (According to the mobile phone's power and the distance to the different antennas it is possible to determine the location, but with less precision than GPS), o Wi-Fi or Bluetooth when the event's location has a connection that enables certain techniques to establish location. The operation in these embodiments of the invention is as follows: each location with a connection point has its own location. The validation system will operate in the event that the mobile device (5) detects that we are in the right place, or valid location within the range of the Wi-Fi or Bluetooth system, otherwise, neither will allow the validation nor will show the ticket directly.

Once the location has been verified and the user has a valid electronic ticket for the time and place determined, it is necessary to validate the ticket. The proper validation of the ticket provides a confirmation code in the mobile device (5) that is established by the creators of the event.

This validation can be performed at least in the following manner, the application, when the user tries to access the event at the same time the validation attempt is in process, and requests the means of access control to the event to carry out an action, where such action establishes that the application orders to the server that the electronic ticket is deactivated for its use. Thus, the action of the means of control to access the event (where the means of access control can be from an inspector that controls the entry to an electronic system) can be between the following:
- to insert a predetermined number in the mobile device (5),
- to insert a default gesture, by the inspector or by the user at the suggestion of the inspector, on the touch screen of the mobile device (5), or
- reading a barcode or bidirectional that is shown on the screen of the mobile device (5) by the electronic access control, where, if the reading is correct, this electronic system will send to the application or the server (3) the deactivation of the ticket for its use.

Once a ticket has been validated cannot be reused again, this is the reason why the server has been ordered (3) to deactivate the electronic ticket for its use.

The following paragraph describes an embodiment of the invention with a sequence of actions that allow a user to enjoy an event such as "going to the movies":
1.- A user buys tickets (the equivalent of an electronic ticket in this embodiment) to the cinema at home. The purchase was done electronically connecting from a computer (1) to the server through the website.
2.- The user receives an e-mail issued from the server with the purchase's data and a user's name and password.
3.- The user downloads from the Internet on his/her mobile phone (5) the application, which functions as a mobile device (5).
4.- The user goes on the right day and time to the movies with his/her mobile (5).
5.- The user, while is waiting at the cue of the cinema, enters into the application and inserts the username and password that has been proposed 9.
6.-
   a) The application shows all tickets purchased, or
   b) The application only displays the tickets for the mobile location (5) that is determined by the geolocation system is within a threshold distance from the location of the film.
7.- The user selects the ticket for the event.
8.- When the person responsible for controlling access to the event arrives, the user shows his/her mobile (5).
9.- The person responsible validates the ticket on the user's mobile phone (5).
10.- If in step 6 is given the condition a), the mobile location system (5) determines that the user is within the preset distance for that ticket.
11.- The person responsible makes a security gesture on the touch screen of the user's mobile (5) so the application interprets the validation.
12.- If successful, the application shows to the person responsible a confirmation code through the user's mobile (5).

In another embodiment, the event's table (4.2) of the database (4) also contains information on a time interval in which access to the event is valid; and, the validation is verified further if the moment of access occurs in the already mentioned time interval. Therefore the validation will be check in three ways: valid ticket, place, and time, which determine that the possibility of fraud is reduced to a greater extent.

Some advantages of this method in any of the embodiments are its reliability and accessibility. As mentioned before, because the user does not have downloaded the ticket neither in his/her device (2, 5) nor in his/her computer (1) from which he or she made the purchase, counterfeiting is avoided, this is so, because the electronic ticket is on the server (3) and the application only shows it when is connected to the server, meaning that, the application only shows the information saved in the database (4) of the server (3). And even if the user makes a screenshot and tries to edit data on the voucher or electronic ticket with any editor of images, this would serve no purpose, because at the time the ticket needs to be validated the necessary connection with the server won't be established and that would not result in the correct validation of the electronic ticket.

In addition, this method allows anyone to buy a ticket in Internet from his/her home computer (1) or from a mobile phone (2) that allows the validation to be done from it (2) or from another mobile phone (5). This means that is allowed to buy a ticket for a third party and the payment systems are independent from those for validation, in this manner, shopping is more secure, because neither the application nor the server stores any billing data.

## Claims

1. Method for validating electronic tickets throughout a system comprising:
d. a server (3) connected to a communications network, preferably Internet,
e. a database (4) managed by the server (3) for the maintenance and storage for at least the following tables:
● a users table (4.1),
● an event's table (4.2) this table should contain at least information about the location of the event,
● a table of electronic tickets purchased (4.3),
wherein the database (4) contains at least the relationship that links each electronic ticket purchased with a user and an event,
f. an application adapted to run on a mobile device (5) connected to said communications network, capable of access to that server (3), and the mobile device (5) comprises at least one location system, preferably GPS, for the validation of electronic tickets available by accessing the server (3),
wherein if a user attempts to access an event, validation occurs if:
● it is verified that the access attempt is made by a user running the application such as c) which shows that the user is in possession of a valid electronic ticket,
● it is verified that the distance between the geolocation of the mobile device (5) and the event location for the electronic ticket is less than a preset value (dₜᵣ).

2. Method according to claim 1, **characterized in that** the event's table (4.2) of the database (4) also contains information on a time interval in which access to the event is valid and, validation further verifies that the time of attempted access occurs in said interval.

3. Method according to claim 1 or 2, **characterized in that** the proper validation in the application running on the mobile device (5) provides a confirmation code.

4. Method according to any of claims 1 to 3, **characterized in that** the application running on the mobile device (5), at the time of validation attempt, requests to the means of control to access an event to initiate an action wherein such action requires the application to order the server to deactivate the ticket for its use.

5. Method according to claim 4, **characterized in that** the action of the means of control to access an event comprises introducing a number in the mobile device (5)

6. Method according to claim 4 **characterized in that** the action of the means of control to access to an event is comprised by providing a gesture on the touch screen of the mobile device (5).

7. Method according to claim 4, **characterized in that** the action of the means of control to an event includes the reading of a two-dimensional code or barcode displayed on the mobile device (5).

8. Method according to any of the previous claims **characterized in that** the access to the application adapted to run on the mobile device (5) is performed by a verification method that requires entering a user name and password.

9. Method according to any of claims 1 to 7 **characterized in that** the access to the application adapted to run on the mobile device (5) is done automatically by identifying the MSISDN of the mobile device (5).

10. Method according to any of the preceding claims **characterized in that** at the time of acquisition of an electronic ticket, on the server (3) it is created a new entry on the electronic tickets purchased table (4.3) and an e-mail is sent to the user with the purchase details.

11. Method according to any of the preceding claims **characterized in that** the application, by establishing communication with the server (3) at a given moment shows:
● or the events available, and within each event, the electronic tickets for that event,
● or all electronic tickets,
● or only the electronic tickets corresponding to the location of the device (5) at that moment,
wherein the electronic tickets are the ones purchased by that user and not validated until that moment.
